# EUROPÄISCHE PATENTSCHRIFT

(11) **EP 0 952 928 B1**
(45) Veröffentlichungstag und Bekanntmachung des Hinweises auf die Patenterteilung: **29.05.2002**
(21) Anmeldenummer: 98907850.6
(22) Anmeldetag: 16.01.1998
(51) Int. Cl.: B60C 27/10

(54) **GLEITSCHUTZKETTE**
ANTI-SKID CHAIN
CHAINE ANTIDERAPANTE

(30) Priorität: 17.01.1997 DE 19702815
(43) Veröffentlichungstag der Anmeldung: 03.11.1999
(73) Patentinhaber: RUD-KETTENFABRIK RIEGER & DIETZ GMBH U. CO., 73432 Aalen (DE)
(72) Erfinder: HOLZWARTH, Dietmar, D-73525 Schwäbisch Gmünd (DE)
(74) Vertreter: Böning, Manfred, Prof.Dr.-Ing.
(86) Internationale Anmeldenummer: DE9800189
(87) Internationale Veröffentlichungsnummer: WO9831556

(56) Entgegenhaltungen:
- DE-A- 3 227 872
- US-A- 1 786 229
- US-A- 2 925 113

## Beschreibung

### Technisches Gebiet

Die Erfindung betrifft eine Gleitschutzkette mit einem von jeweils einer im Bereich der Reifenflanken angeordneten inneren und äußeren Halterung gehaltenen Laufnetz, bei dem der Umfang der inneren Halterung durch einen über die Lauffläche des Reifens geführten Spannstrang verkürzbar ist.

### Stand der Technik

Aus der EP 0 263 778 B1 ist eine Gleitschutzkette bekannt, deren innere Halterung zweckmäßigerweise von einem Federstahlbügel gebildet wird, dessen Enden über einen Spannstrang miteinander verbunden sind, der über die Lauffläche des Reifens zur äußeren Halterung geführt ist, um dort verwahrt zu werden. Die Länge des zu verwahrenden Endes des Spannstranges hängt von der Größe des Abstandes zwischen den vom Spannstrang überbrückten Enden der inneren Halterung und der Führung des Spannstranges an der Überbrückungsstelle ab; sie kann beträchtliche Werte annehmen und zu Unterbringungsschwierigkeiten für das Spannstrangende an der Reifenaußenseite führen. Mit Problemen muß insbesondere bei der Montage von Gleitschutzketten auf sogenannte Breitreifen gerechnet werden, zumal diese bei modernen Fahrzeugen in zunehmendem Maße in engen Radkästen untergebracht sind. In Fällen der zuletzt genannten Art kann bereits eine einzelne im Bereich der Reifenflanke angeordnete Durchziehöse für einen Spannstrang zu Karosserieschäden führen.

Aus der DE 42 25 802 A1 ist eine gattungsgemäße Gleitschutzhatte bekannt wo man versucht hat, den aufgezeigten Schwierigkeiten dadurch zu begegnen, daß man den durch eine in die von einer Seitenkette gebildete äußere Halterung integrierte Durchziehöse geführten Spannstrang und zu dessen zusätzlicher Führung dienende, an der Seitenkette befestigte Führungsösen in den Felgenbereich, d.h. zur Radachse hin verlagerte. Diese Lösung macht jedoch die Verwendung eines Felgenschutzes erforderlich, der von einer Scheibe gebildet wird, die mit bügelförmigen Anschlußelementen versehen ist, in die die äußere Halterung bildende Seitenkette eingehängt werden muß. Der zwischen der Seitenkette und dem Spannstrang auf der einen Seite und der Reifenflanke und der Felge auf der anderen Seite angeordnete Felgenschutz verhindert zwar Beschädigungen der Fahrzeugfelgen durch den außerhalb des Bereiches der Reifenflanken verwahrten Spannstrang, beansprucht aber nicht zuletzt aufgrund der die Seitenkette umschließenden Anschlußelemente gleichzeitig seinerseits mehr Raum als erwünscht.

### Darstellung der Erfindung

Der Erfindung liegt die Aufgabe zugrunde, eine Gleitschutzkette der in Betracht gezogenen Art zu schaffen, die die vorstehend angedeuteten Probleme durch eine Neugestaltung der äußeren Halterung und der Spannstrangführung eliminiert. Diese Aufgabe wird erfindungsgemäß dadurch gelöst, daß die äußere Halterung als zumindest im Bereich der Reifenflanke flache Scheibe ausgebildet ist und daß sie im Bereich der Radfelge Mittel zum Verwahren des Endes des Spannstranges aufweist.

Der von der erfindungsgemäßen Kette beanspruchte Freiraum zwischen der Reifenflanke und der Radkasteninnenwand ist außerordentlich gering. Neben dem Vorteil des geringen Raumbedarfs der erfindungsgemäßen Gleitschutzkette wirkt sich der Umstand positiv aus, daß das Kettennetz durch die äußere Halterung eine die Montage erleichternde Vorordnung erfährt. Schließlich erweist es sich als zweckmäßig, daß auf einen besonderen Felgenschutz verzichtet werden kann.

Weitere Einzelheiten und Merkmale ergeben sich aus den Unteransprüchen und der nachstehenden Beschreibung zweier Ausführungsformen der Erfindung.

### Kurze Beschreibung der Zeichnungen

In der Zeichnung zeigen:

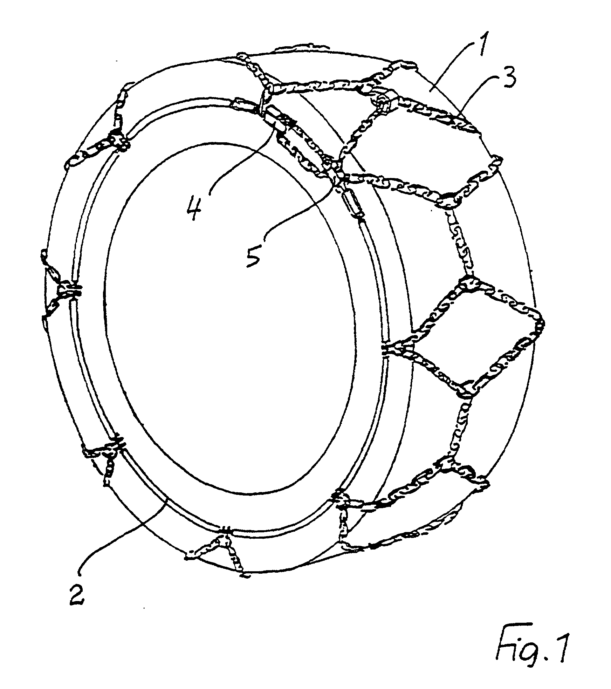

Fig. 1 die Rückansicht einer Gleitschutzkette mit einer von einem Federstahlbügel gebildeten inneren Halterung sowie eine Teilansicht des Laufnetzes der Kette,
Fig. 2 die Vorderansicht der Gleitschutzkette gemäß Fig. 1 mit einer von einer ringförmigen Scheibe gebildeten inneren Halterung und einer Traverse zur Verwahrung eines Spannstranges,
Fig. 3 einen Schnitt längs der Linie III-III in Fig. 2,
Fig. 4 eine Modifikation des in Fig. 3 bei IV angedeuteten Bereiches und
Fig. 5 die Vorderansicht einer modifizierten Gleitschutzkette mit einer der Fig. 1 entsprechenden Rückseite.

### Wege zur Ausführung der Erfindung

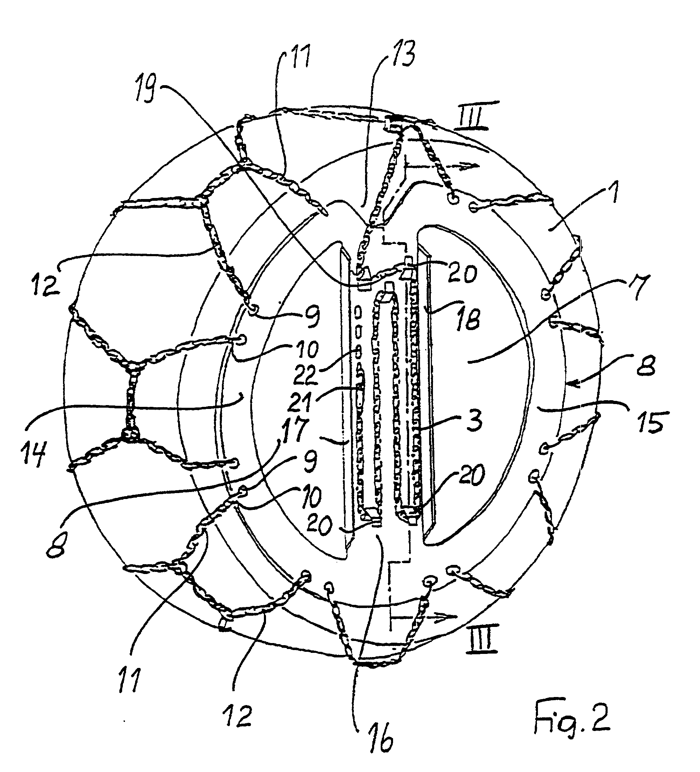

In den Figuren ist 1 ein sogenannter Breitreifen, d.h. ein Reifen, der viel Raum beansprucht und den Einsatz von Gleitschutzketten, deren Teile weit über die Reifenflanken vorstehen, in vielen Fällen ausschließt. Die innere Halterung 2 der auf den Reifen 1 aufgelegten Gleitschutzkette wird von einem Federstahlbügel gebildet, der die Kettenmontage außerordentlich leicht gestaltet. Um den Federstahlbügel über den Reifen 1 stülpen zu können, muß er aufgespreizt werden. Der Abstand zwischen den durch einen nach Art eines Flaschenzuges geführten Spannstrang 3 überbrückten Enden 4,5 des Federstahlbügels nimmt dabei erhebliche Werte an, so daß man um die Verwendung vergleichsweise langer Spannstränge 3 nicht herumkommt. Das Problem, das aus den angedeuteten Gegebenheiten erwachst, besteht darin, daß nach erfolgter Montage und dem Festziehen des Spannstranges 3 dessen an der Vorderseite des Reifens anfallende überschüssige Länge verwahrt werden muß. In der Praxis geschieht dies bei bekannten Gleitschutzketten üblicherweise dadurch, daß man das Spannstrangende mehrfach um die regelmäßig von einer Seitenkette gebildete äußere Halterung schlingt, um schließlich einen am Spannstrangende angeordneten Haken in ein Glied der äußeren Halterung einzuhängen. Es versteht sich, daß das Umschlingen einer im Bereich der Reifenflanke gelegenen Seitenkette mit einem Spannstrang die Gesamtbreite der Gleitschutzkette und des ohnehin breiten Reifens in einer Weise erhöht, die unerwünscht ist. Wie aus der Fig. 2 erkennbar ist, läßt sich das geschilderte Problem lösen, indem man unter Verzicht auf eine Spannstrangumlenkung im Bereich der vorderen Reifenflanke das zu verwahrende Spannstrangende außerhalb des Flankenbereiches unterbringt. Die äußere Halterung besteht zu diesem Zweck aus einer flachen, mit Ausnehmungen 6,7 versehenen Scheibe 8. Die Scheibe 8 weist über ihren Umfang verteilt Löcher 9 auf, in die die Endglieder 10 von Kettenstrangabschnitten 11,12 eingehängt sind, wobei als Endglieder auch elastische Verbindungselemente in Betracht kommen. Im Bereich des Einlaufes des Spannstranges 3 in den zentralen Bereich der Scheibe 8 ist diese mit einer Aussparung 13 versehen, um zu verhindern, daß der Spannstrang 3 weiter über die Reifenflanke vorsteht als die Endglieder 10 der Kettenstrangabschnitte 11,12. Der von den Abschnitten 14,15 der Scheibe 4 gebildete Ring wird durch eine Traverse 16 überbrückt, die das zu verwahrende Kettenstrangende aufnimmt. Die seitliche Stege 17,18 aufweisende Traverse 16 ist mit einer Rücklaufsperre 19 und mit mehreren Umlenkelementen 20 für den Spannstrang 3 versehen. Ein am Ende des Spannstranges 3 angeordneter Haken 21 kann in eine von mehreren Ausnehmungen 22 eingehängt werden.

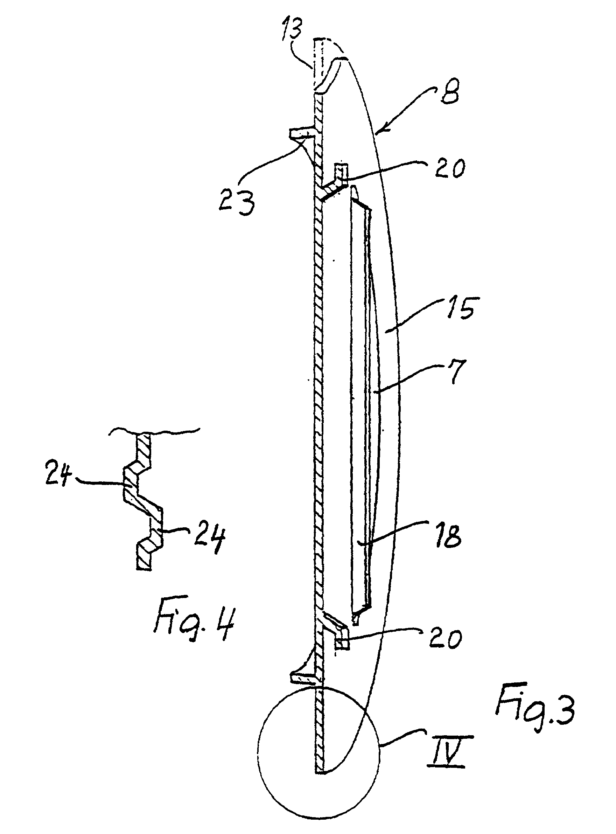

Dem in Fig. 3 dargestellten Schnitt ist entnehmbar, daß die Scheibe 8 mit einem zu ihrer Lagejustierung in der Felgenschüssel des Rades ragenden Ringbund 23 versehen ist, der gleichzeitig zur Steigerung der Steifigkeit der vorzugsweise aus Kunststoff hergestellten Scheibe 8 dient.

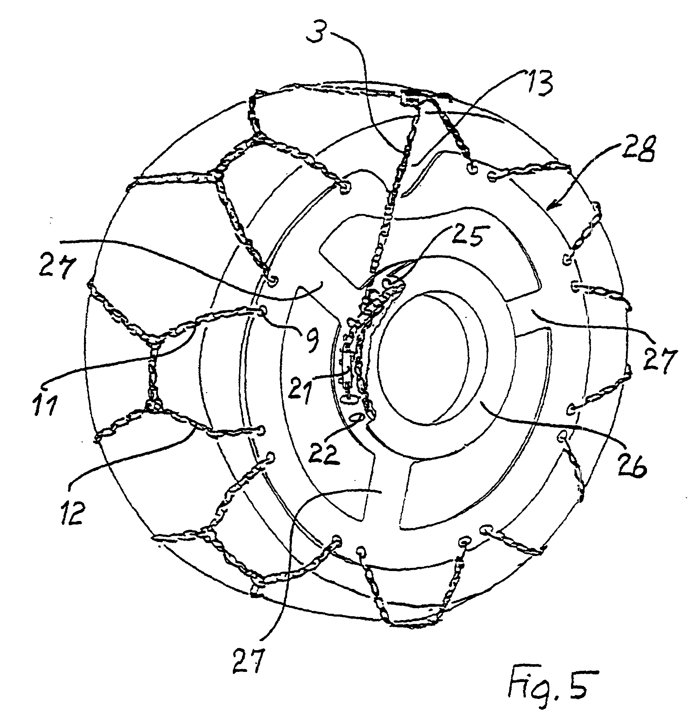

Zur Erhöhung der Scheibensteifigkeit läßt sich diese - wie in Fig. 4 angedeutet - im übrigen mit Sicken 24 versehen.

Anstelle einer Traverse 16 läßt sich zum Verwahren des Endes des Spannstranges 3 - wie dies in Fig. 5 dargestellt ist - auch eine mit einer umlaufenden Nut 25 versehene Spule 26 verwenden, die über speichenartige, flache Stege 27 mit den einen Ring bildenden Abschnitten einer modifizierten Scheibe 28 verbunden ist und entweder feststehend oder drehbar ausgebildet sein kann.

In beiden beschriebenen Fällen erfüllen die Scheiben 8 bzw. 28 neben ihrer Funktion als äußere Halterung und Aufwickelvorrichtung für das Ende des Spannstranges 3 noch die Funktion eines insbesondere bei Verwendung von Leichtmetallfelgen erwünschten Felgenschutzes.

## Patentansprüche

1. Gleitschutzkette mit einem von jeweils einer im Bereich der Reifenflanken angeordneten inneren und äußeren Halterung gehaltenen Laufnetz, bei dem der Umfang der inneren Halterung durch einen über die Lauffläche des Reifens (1) geführten Spannstrang (3) verkürzbar ist, **dadurch gekennzeichnet, daß** die äußere Halterung als zumindest im Bereich der Reifenflanke flache Scheibe (8, 28) ausgebildet ist und daß sie im Bereich der Radfelge Mittel zum Verwahren des Endes des Spannstranges (3) aufweist.

2. Gleitschutzkette nach Anspruch 1, **dadurch gekennzeichnet, daß** die Scheibe (8) ringförmige Abschnitte (14,15) und eine den Innenraum des von diesen Abschnitten gebildeten Ringes überbrückende Traverse (16) zum Verwahren des Endes des Spannstranges (3) aufweist.

3. Gleitschutzkette nach Anspruch 2, **dadurch gekennzeichnet, daß** die Seitenränder der Traverse (16) mit Stegen (17,18) versehen sind.

4. Gleitschutzkette nach einem oder mehreren der Ansprüche 1 bis 3, **dadurch gekennzeichnet, daß** die äußere Halterung mit Umlenkelementen (20) für das zu verwahrende Ende des Spannstranges (3) versehen ist.

5. Gleitschutzkette nach einem oder mehreren der Ansprüche 1 bis 4, **dadurch gekennzeichnet, daß** zu den Mitteln zum Verwahren des Spannstranges (3) eine Rücklaufsperre (19) gehört.

6. Gleitschutzkette nach einem oder mehreren der Ansprüche 1 bis 5, **dadurch gekennzeichnet, daß** die äußere Halterung mehrere Ausnehmungen (22) zum Einhängen eines am äußersten Ende des Spannstranges (3) angeordneten Hakens (21) aufweist.

7. Gleitschutzkette nach Anspruch 1, **dadurch gekennzeichnet, daß** die Scheibe (28) aus einem flachen Ring und einer mit diesem verbundenen zentralen Aufwickelvorrichtung für das Ende des Spannstranges (3) besteht.

8. Gleitschutzkette nach Anspruch 7, **dadurch gekennzeichnet, daß** die Aufwickelvorrichtung eine das zu verwahrende Ende des Spannstranges (3) aufnehmende umlaufende Nut (25) aufweist.

9. Gleitschutzkette nach einem oder mehreren der Ansprüche 1 bis 8, **dadurch gekennzeichnet, daß** am Umfang der Scheibe (8;28) im Bereich des Einlaufes des zu verwahrenden Endes des Spannstranges (3) in den Scheibenbereich eine Aussparung (13) vorgesehen ist.

10. Gleitschutzkette nach einem oder mehreren der Ansprüche 1 bis 9, **dadurch gekennzeichnet, daß** die Scheibe (8) mit einem zu ihrer Lagejustierung dienenden, in die Felgenschüssel eines Rades ragenden Ringbund (23) versehen ist.

11. Gleitschutzkette nach einem oder mehreren der Ansprüche 1 bis 10, **dadurch gekennzeichnet, daß** die äußere Halterung aus Kunststoff oder Blech besteht.

12. Gleitschutzkette nach einem oder mehreren der Ansprüche 1 bis 11, **dadurch gekennzeichnet, daß** die äußere Halterung einen Felgenschutz bildet.

13. Gleitschutzkette nach einem oder mehreren der Ansprüche 1 bis 12, **dadurch gekennzeichnet, daß** die flache Scheibe einen profilierten Querschnitt aufweist.

14. Gleitschutzkette nach einem oder mehreren der Ansprüche 1 bis 13, **dadurch gekennzeichnet, daß** zwischen dem Laufnetz und der äußeren Halterung elastische Verbindungselemente angeordnet sind.

## Claims

1. Snow chain having a running net held by an inner and an outer mounting, each arranged in the region of the tyre flanks, in which the circumference of the inner mounting can be shortened by a tensioning strand (3) guided over the tread of the tyre (1), **characterized in that** the outer mounting is designed as a flat disc (8, 28), at least in the region of the tyre flank, and **in that** it possesses means in the region of the wheel rim for securing the end of the tensioning strand (3).

2. Snow chain according to Claim 1, **characterized in that** the disc (8) possesses annular sections (14, 15) and a crosspiece (16), bridging the interior space of the ring formed by these sections, to secure the end of the tensioning strand (3).

3. Snow chain according to Claim 2, **characterized in that** the side edges of the crosspiece (16) are provided with webs (17, 18).

4. Snow chain according to one or more of Claims 1 to 3, **characterized in that** the outer mounting is provided with deflection elements (20) for the end of the tensioning strand (3) to be secured.

5. Snow chain according to one or more of Claims 1 to 4, **characterized in that** the means for securing the tensioning strand (3) include an anti-return lock (19).

6. Snow chain according to one or more of Claims 1 to 5, **characterized in that** the outer mounting has a plurality of recesses (22) for the suspending of a hook (21) arranged on the outermost end of the tensioning strand (3).

7. Snow chain according to Claim 1, **characterized in that** the disc (28) consists of a flat ring and a central wind-up device connected thereto for the end of the tensioning strand (3).

8. Snow chain according to Claim 7, **characterized in that** the wind-up device possesses a circumferential groove (25) receiving the end of the tensioning strand (3) to be secured.

9. Snow chain according to one or more of Claims 1 to 8, **characterized in that** a cutout (13) is provided on the circumference of the disc (8; 28) in the region where the end of the tensioning strand (3) to be secured enters the disc region.

10. Snow chain according to one or more of Claims 1 to 9, **characterized in that** the disc (8) is provided with an annular collar (23) serving for its positional adjustment and extending into the rim bowl of a wheel.

11. Snow chain according to one or more of Claims 1 to 10, **characterized in that** the outer mounting consists of plastic or sheet metal.

12. Snow chain according to one or more of Claims 1 to 11, **characterized in that** the outer mounting forms a rim protector.

13. Snow chain according to one or more of Claims 1 to 12, **characterized in that** the flat disc exhibits a profiled cross section.

14. Snow chain according to one or more of Claims 1 to 13, **characterized in that** resilient connecting elements are arranged between the running net and the outer mounting.

## Revendications

1. Chaîne antidérapante comprenant un maillage de roulement soutenu respectivement par une attache interne et une attache externe agencées dans la zone des flancs du pneu, la périphérie de l'attache interne pouvant être raccourcie par un câble de serrage (3) guidé sur la surface de roulement du pneu (1), **caractérisée en ce que** l'attache externe est conformée en disque plat (8, 28) au moins dans la zone du flanc du pneu et **en ce qu'**elle présente, dans la zone de la jante de roue, des moyens pour stocker l'extrémité du câble de serrage (3).

2. Chaîne antidérapante selon la revendication 1, **caractérisée en ce que** le disque (8) présente des sections annulaires (14, 15) et une traverse (16) pontant l'espace interne de l'anneau formé par ces sections pour stocker l'extrémité du câble de serrage (3).

3. Chaîne antidérapante selon la revendication 2, **caractérisée en ce que** les bords latéraux de la traverse (16) sont pourvus de barrettes (17, 18).

4. Chaîne antidérapante selon une ou plusieurs des revendications 1 à 3, **caractérisée en ce que** l'attache externe est pourvue d'éléments de renvoi (20) pour l'extrémité du câble de serrage (3) à stocker.

5. Chaîne antidérapante selon une ou plusieurs des revendications 1 à 4, **caractérisée en ce qu'**un arrêt anti-retour (19) appartient aux moyens permettant de stocker le câble de serrage (3).

6. Chaîne antidérapante selon une ou plusieurs des revendications 1 à 5, **caractérisée en ce que** l'attache externe présente plusieurs cavités (22) pour accrocher un crochet (21) agencé à l'extrémité la plus à l'extérieur du câble de serrage (3).

7. Chaîne antidérapante selon la revendication 1, **caractérisée en ce que** le disque (28) est constitué d'un anneau plat et d'un dispositif d'enroulement central relié à celui-ci pour l'extrémité du câble de serrage (3).

8. Chaîne antidérapante selon la revendication 7, **caractérisée en ce que** le dispositif d'enroulement présente une encoche périphérique (25) recevant l'extrémité du câble de serrage (3) à bloquer.

9. Chaîne antidérapante selon une ou plusieurs des revendications 1 à 8, **caractérisée en ce qu'**il est prévu, sur la périphérie du disque (8, 28) dans la zone d'entrée de l'extrémité du câble de serrage (3) à bloquer, une cavité (13) dans la zone du disque.

10. Chaîne antidérapante selon une ou plusieurs des revendications 1 à 9, **caractérisée en ce que** le disque (8) est pourvu d'un épaulement annulaire (23) servant à son ajustement en position et dépassant dans le creux de jante d'une roue.

11. Chaîne antidérapante selon une ou plusieurs des revendications 1 à 10, **caractérisée en ce que** l'attache externe est constituée d'un matériau synthétique ou de tôle.

12. Chaîne antidérapante selon une ou plusieurs des revendications 1 à 11, **caractérisée en ce que** l'attache externe forme un protège-jante.

13. Chaîne antidérapante selon une ou plusieurs des revendications 1 à 12, **caractérisée en ce que** le disque plat présente une section transversale profilée.

14. Chaîne antidérapante selon une ou plusieurs des revendications 1 à 13, **caractérisée en ce que** des éléments de liaison élastiques sont agencés entre le maillage de roulement et l'attache externe.
